# EUROPEAN PATENT APPLICATION

(11) **EP 1 790 863 A1**
(43) Date of publication of application: **30.05.2007**
(21) Application number: 05026010.8
(22) Date of filing: 29.11.2005
(51) Int. Cl.: F16B 15/04, F16B 15/06

(54) **Fastening element**

(71) Applicant: Joker Industrial Co., Ltd., No. 64, Lane 651 Section 2 Chung-Yang Road Hsien Hsi Hsiang Changhua Hsien (TW)
(72) Inventor: Huang, Pang Ching, Hsien Hsi Hsiang Changhua Hsien (TW)
(74) Representative: Schreiber, Wolfgang

(57) **Abstract**

There is described a fastening element (100) for applications in direct fastening techniques, which comprises a main nail (1) having a stem (2) of hardened steel. At its one end that faces into a setting direction the stem (2) is provided with a tip portion (3). At its opposite end it is provided with a head portion (4) having a diameter which is greater than a diameter of the stem (2). The stem (2) is further provided with at least two annular protrusions (5 - 8) which extend washer-like beyond the diameter of the stem (2) and are axially spaced from each other. A rear annular protrusion (5) which is located closer to the head portion (4) has a diameter which approximately corresponds to the diameter of the head portion (4). The diameter of a frontmost annular protrusion (8) which is located closer to said tip portion (3) has a diameter which is smaller than the diameter of the rear annular protrusion (5). Each said annular protrusion (5 - 8) is provided about its circumference with at least one gap (9). The gaps (9) in the washer-like protrusions (5 - 8) are axially aligned and accommodate an auxiliary nail element (11). The auxiliary nail element (11) has a shank (12), the diameter of which is smaller than the diameter of the stem (2) of the main nail (1). The length of the shank (12) is shorter than that of the stem (2). The shank (12) of the auxiliary nail element (11) is provided with a tip (13) which is retreated with respect to the tip (3) of the stem (2). The shank (12) is fixedly attached (15) with its rear portion to the stem (2) of the main nail (1).

## Description

The present invention relates to a fastening element for use with a handheld setting tool in accordance with the precharacterizing clause of patent claim 1.

In direct fastening technique fastening elements, such as nails, bolts, pins etc, which are usually made of steel are driven into construction elements with special setting tools. The fastening elements usually are driven into the underground material by a piston of the setting tool, which is accelerated by expanding gases from liquid, gaseous, or solid fuel, or is driven pneumatically, mechanically or electropneumatically. The fastening elements, which in certain embodiments of the setting tool may be stored in magazines that are attachable to the setting tool, have a stem provided at its end which faces into a setting direction with a tip. At its opposite end the stem is provided with a head having a diameter which is greater than that of the stem. The fastening elements are used for attaching or fastening objects directly to hard materials, such as, concrete, metal, stone and the like. Besides applications for temporary fastenings at constructions sites, fastenings of electrical and sanitary installations, etc. the direct fastening technique is also applied for the attachment of isolation materials on walls, ceilings and the like with specially designed mushroom-shaped fastening elements.

In wall construction and for isolation purposes the fastening of dry walls and plaster boards on construction elements is accomplished usually mechanically by screw fastening or chemically with adhesives. An alternative fastening technique involves special fastening frames, into which the dry walls and plaster boards are fitted. The dry walls and plaster boards mostly are attached to wooden underconstructions which have been established before on concrete walls or on brick walls but also on steel constructions. Special fastening screws are then screwed directly through the material of the dry wall or the plaster board and into the wooden underconstruction. It is immediately apparent that the current technique of fastening dry walls and plaster boards to construction materials by screwing them onto an underconstruction, which first must be established and fixed to the construction materials, is both, costly and time consuming. In view of the increasing importance of dry wall construction and of the increasing application of plaster boards in construction business there exists a considerable desire and need for a novel fastening technique, which is both, faster and more cost efficient.

Accordingly, an object of the present invention is to provide a fastening element which allows an attachment of dry walls and plaster boards directly to construction materials without the need to first provide an underconstruction or special fastening frames. The fastening element according to the invention shall be applicable in direct fastening technique and shall allow attachments of dry walls and plaster boards directly onto steel construction elements as well as onto hard underground materials, such as concrete or stone. The attachment shall be at least as strong and durable as fastenings with current conventional screw fastening elements and fastening techniques.

These and other objects of the present invention, which will become apparent hereinafter, are achieved by a fastening element having at least the features which are listed in the characterising clause of patent claim 1. Preferred embodiments of the invention and/or further improvements thereof are subject of the dependent patent claims.

In accordance with the objects of the invention there is provided a fastening element for application in direct fastening technique, which comprises a main nail having a stem of hardened steel. At its one end that faces into a setting direction the stem is provided with a tip portion. At its opposite end it is provided with a head portion having a diameter which is greater than a diameter of the stem. The stem is further provided with at least two annular protrusions which extend washer-like beyond the diameter of the stem and are axially spaced from each other. A rear annular protrusion which is located closer to the head portion of the main nail has a diameter which approximately corresponds to the diameter of the head portion. The diameter of a front annular protrusion which is located closer to said tip portion has a diameter which is smaller than the diameter of the rear annular protrusion. Each one of the at least two annular protrusions is provided about its circumferences with at least one gap. The gaps in the washer-like protrusions are axially aligned and accommodate an auxiliaryy nail element. The auxiliary nail element has a shank, the diameter of which is smaller than the diameter of the stem of the main nail. The length of the shank is shorter than that of the stem. The shank of the auxiliary nail element is provided with a tip which is retreated with respect to the tip of the stem of the main nail. The shank of the auxiliary nail is fixedly attached to the stem of the main nail with its rear portion.

The fastening element in accordance with the claimed invention allows the attachment of dry walls and plaster boards directly to construction element, such as steel, concrete, stone, etc. without the need to provide an underconstruction. The stem of the main nail of this "mother-son type" fastening element is made from hardened steel and is capable to be driven directly into hard construction elements. The rear annular protrusion of the stem is of about the same diameter as the head portion and serves for a stable support of the fastening element in the barrel of a setting tool, which is operated by expanding gases from liquid, gaseous, or solid fuel, or which is operated pneumatically, mechanically or electropneumatically. When the fastening element is driven by the piston of the setting tool through the dry wall or the plaster board the hardened stem of the main nail will enter the underlying construction element. Depending on the hardness of the construction element the frontmost washer-like annular protrusion may enter the construction element and, especially in case of a steel frame, penetrate the frame and provide a form locking connection in addition to the welding lock between the stem of the main nail and the steel frame. Upon contact with the surface of the hard construction element the at least one auxiliary nail element, which usually is not hardened, will be deformed. The deflected shank portion of the auxiliary nail element provides for an additional formlocking fastening of the dry wall or plaster board. The deflected shank portion of the auxiliary nail element provides even sufficient formlocking anchorage in isolation materials, such as, for example, in polystyrol sheets. Thus the fastening element according to the invention may even be used instead of special mushroom-shaped fastening elements which are driven into the underground using direct fastening technique and equipment.

With the fastening element according to the invention having a main nail and an auxiliary nail element, fast and cost efficient fastenings of dry walls and plaster boards directly onto underlying hard construction elements, i.e. steel frames, can be accomplished. The attachments are at least as strong and durable as those which are achieved with conventional fastening methods employing screws and wooden underconstructions. There is no more need to prepare usually wooden underconstructions or special frame constructions for the attachment of the dry walls or plaster boards.

In an advantageous embodiment of the invention the auxiliary nail element in its shank is provided with a weakened portion which, with respect to the setting direction, is located behind the frontmost annular protrusion. The weakened portion in its shank, which faces away from the stem of the main nail, supports a guided deflection of the shank of the auxiliary nail into the material of the dry wall or plaster board.

Advantageously the stem of the main nail is provided with more than two washer-like annular protrusions which are axially spaced from each other. Each annular protrusion has a diameter which is greater than the diameter of an annular protrusion preceeding in setting direction. Thus, the rear annular protrusion has the greatest diameter which approximately corresponds to the diameter of the head portion of the stem. The next annular protrusion following in setting direction has a smaller diameter, etc. The frontmost annular protrusion in vicinity of the tip portion of the stem finally has the smallest diameter. The washer-like annular protrusions also provide for a certain formlocking connection within the dry wall or plaster board. Depending on the thickness of the dry wall or plaster board and on the energy provided for the driving in of the fastening element the stem may be driven farther into the construction element, i.e. a steel frame, such that, for example, the annular protrusion next to the tip portion will also penetrate the steel frame and provide a form locking connection.

It is found to be advantageous if the diameters of the annular protrusions are dimensioned such, that an enveloping conical plane of a cone tangents said washer-like annular protrusions.

In another advantageous embodiment of the invention the washer-like annular protrusions are provided about their circumferences with more than one gap. The gaps in axially consecutive annular protrusions are axially aligned. Each set of axially aligned gaps accommodates an auxiliary nail element having a shank, the diameter of which is smaller than the diameter of the stem of the main nail. The length of the shank of each auxiliary nail element is shorter than that of the stem. The tips of the shanks of the auxiliary nail elements are retreated with respect to the tip of the stem of the main nail. Each shank with its rear portion is fixedly attached to the stem of the main nail and is provided with a weakened portion which with respect to the setting direction is located behind the frontmost annular protrusion. By providing more than one auxiliary nail element the formlocking retainment of the dry wall or plaster board is increased.

In an advantageous embodiment of the fastening element there are provided three auxiliary nail elements which are accommodated in axially aligned gaps of the annular protrusions. Preferably the three auxiliary nail elements are equally spaced from each other in a circumferential direction.

It may also be advantageous if the auxiliary nail elements each have shanks with lengths which are distinct from each other. The weakened portions of the shanks are located in setting direction behind an annular protrusion which is located next to the tip of each shank.

The shanks of the auxiliary nail elements have tips which are asymmetrically shaped. In particular is the tip shape selected such that it supports a deflection of the auxiliary nail away from the stem of the main nail as the fastening element is driven into a steel construction element.

From an energetic point of view with regard to the driving-in of the fastening element it is regarded advantageous if portions of the stem of the main nail are conically shaped in between two consecutive annular protrusions, the stem having its larger diameter at the annular protrusion which is closer to the head portion of the stem.

In order to provide a fastening element having sufficient strength it is advantageous if the larger diameters of the conically shaped portions of the stem of the main nail correspond to each other. The conically shaped portions have enveloping surfaces, which are equally inclined with respect to an axis of the stem.

It is regarded advantageous for the penetration of the construction element, i.e. a steel frame, if the washer-like annular protrusions are inclined with respect to a cross-sectional plane which extends vertically to the axis of the stem of the main nail.

The fastening element according to the invention is manufactured more easily if the conically shaped portions of the stem of its main nail are part of a single enveloping surface, which extends helically about the stem. Thus, the stem can be shaped e.g. by roller-forming.

While the auxiliary nail elements usually are not hardened in order to be readily deformable, it may be advantageous for certain applications if the shank of at least one auxiliary nail element is hardened. The hardened auxiliary nail element then will not be deformed when it contacts the surface of the construction element, i.e. a steel frame, but rather it will penetrate the steel frame and contribute to the fixation of the main nail. Preferably the hardened auxiliary nail element does not have a weakened portion in its shank.

Fastening elements in accordance with the claimed invention allow a fastening of dry walls and plaster boards directly to the underlying construction elements, i.e. steel frames. The fastening elements are driven directly through the dry wall or plaster board and into the underlying construction element using a direct fastening technique and employing setting tools involving expanding gases from liquid, gaseous, or solid fuel, or pneumatic, mechanic or electropneumatic driving forces.

The novel features of the present invention, which are considered as characteristic for the invention, are set forth in the appended claims. The invention itself, however both to its construction and its mode of operation, together with additional advantages and objects thereof, will be best understood from the following detailed description of exemplary embodiments, when read with reference to the accompanying drawings, in which:
- Fig. 1: an exploded perspective view of a first embodiment of the fastening element according to the invention;
- Fig. 2: a perspective view of the assembled fastening element according to Fig. 1;
- Fig. 3: a side view of the assembled fastening element according to Fig. 2;
- Fig. 4: a cross-sectional top view of the assembled fastening element according to Fig. 2;
- Fig. 5: a second embodiment of the fastening element in the state of being driven through a dry wall into a steel construction element;
- Fig. 6: the driven in fastening element according to Fig. 5 in the final stage; and
- Fig. 7: another embodiment of the driven in fastening element in the final stage.

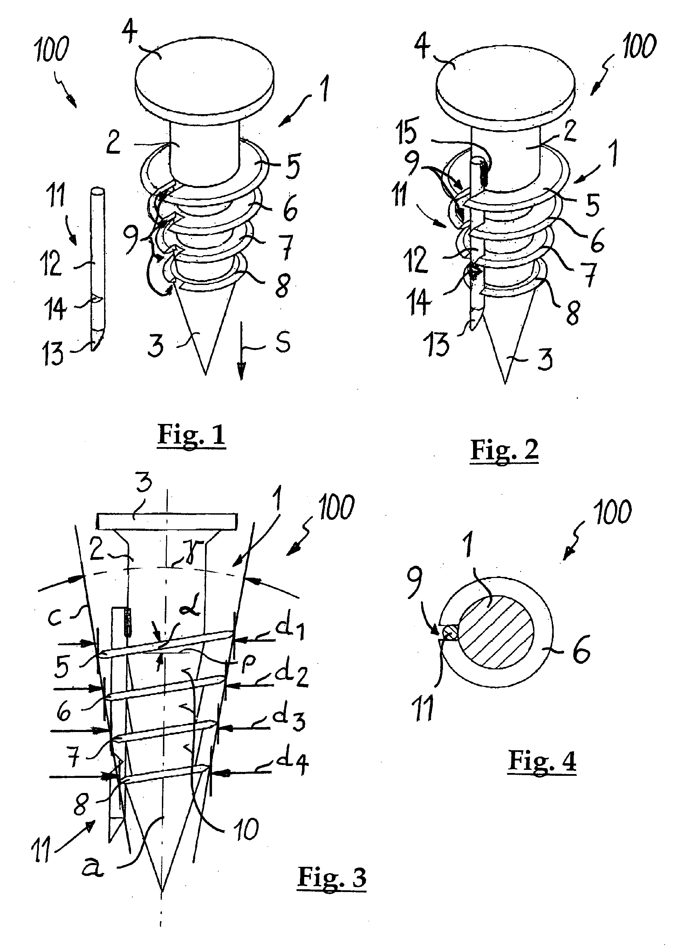

In the exploded view of Fig. 1 a first embodiment of the fastening element according to the invention is generally designated with reference numeral 100. It comprises a main nail 1 which has a stem 2 of hardened steel. On its one end the stem 2 is provided with a tip portion 2. On the opposite end the stem 2 is provided with a head portion 4 which has a greater diameter than the maximum diameter of the stem 2. The stem 2 is further provided with washer-like annular protrusions 5, 6, 7, and 8, which extend beyond the maximum diameter of the stem 2. The annular protrusions 5 - 8 are axially spaced from each other and are arranged such, that the washer-like annular protrusion with the largest diameter is next to the head portion 4 of the stem 2, while the annular protrusion 8, which with respect to a setting direction S is the frontmost annular protrusion, which has the smallest diameter is located next to the tip portion 3 of the stem 2. The washer-like annular protrusions 5 - 8 are manufactured integrally with the stem 2 and form a part thereof. Each annular protrusion 5 - 8 is provided with a radially extending gap 9. The gaps 9 in the annular protrusions 5 - 8 are arranged such that they are axially aligned.

The fastening element 100 further comprises an auxiliary nail element 11 which has a shank 12 with a tip portion 13 which is asymmetrically shaped. The shank is also provided with a weakened portion 14, which may have the shape of a notch in the shank 12. The auxiliary nail element 11 is adapted to be received by the gaps 9 in the washer-like annular protrusions 5 - 8 of the stem 2 of the main nail 1. The auxiliary nail element 11 is made of metal, preferably of steel. Usually it is not made of hardened steel.

Fig. 2 shows the fastening element 100 in the assembled stage. The auxiliary nail element 11 has been placed into the gaps 9 in the washer-like annular protrusions 5 - 8 such, that the notch-like weakened portion 14 faces away from the stem 2 of the main nail 1. With its rear end the shank 12 of the auxiliary nail 11 is fixedly attached to the stem 2 of the main nail 1. The attachment is accomplished, e.g., by a welding spot 15 or the like. The shank 12 of the auxiliary nail 11 is shorter than the stem 2 of the main nail 1. Thus, the tip 13 of the shank 12 is retreated with respect to the tip portion 3 of the stem 2 of the main nail 1.

From the side view of the fastening element 100 in Fig. 3 it becomes clear that the washer-like annular protrusions 5 - 8 have outer diameters d₁ - d₄ which are selected such, that an enveloping conical plane c touches the outer diameters of the annular protrusions 5 - 8 tangentially. The rearmost annular protrusion 5 preferably has a diameter d₁ which corresponds about to the outer diameter of the head portion 3 of the stem 2 of the main nail 1. Thus, the diameters of the annular protrusions 5 - 8 in setting direction S follow the rule d₁ > d₂ > d₃ > d₄. From Fig. 3 it also becomes clear that the washer-like annular protrusions 5 - 8 are inclined with respect to cross-sectional plane p which extends perpendicular with respect to the axis a of the stem 2 of the main nail 1. In between two consecutive washer-like annular protrusions 5 - 8 the stem 2 of the main nail 1 is provided with conically shaped portions 10. The larger diameter of the conically shaped portions 10 is located next to the annular protrusion which is closer to the head portion 3 of the stem 2. The shapes of the conical portions 10 of the stem 2 correspond to each other. Preferably the enveloping surfaces of the conical portions 10 are part of a single enveloping surface, which extends helically about the stem 2. The auxiliary nail element 11 is mounted such that it extends axially about parallel to the axis a of the stem 2 of the main nail 1. It does not extend beyond the outer diameter of the head portion 3 of the stem 2 of the main nail 1.

The cross-sectional top view of the fastening element 100 in Fig. 4 shows the main nail 1 and the auxiliary nail element 11 in cross section. The sectional plane has been selected such, that it extends between the rearmost annular protrusion and the preceeding annular protrusion 6. From Fig. 4 it becomes clear that the diameter of the auxiliary nail element 11 is selected such that it is easily accommodated in the gap 9 in the washer-like annular protrusion 6.

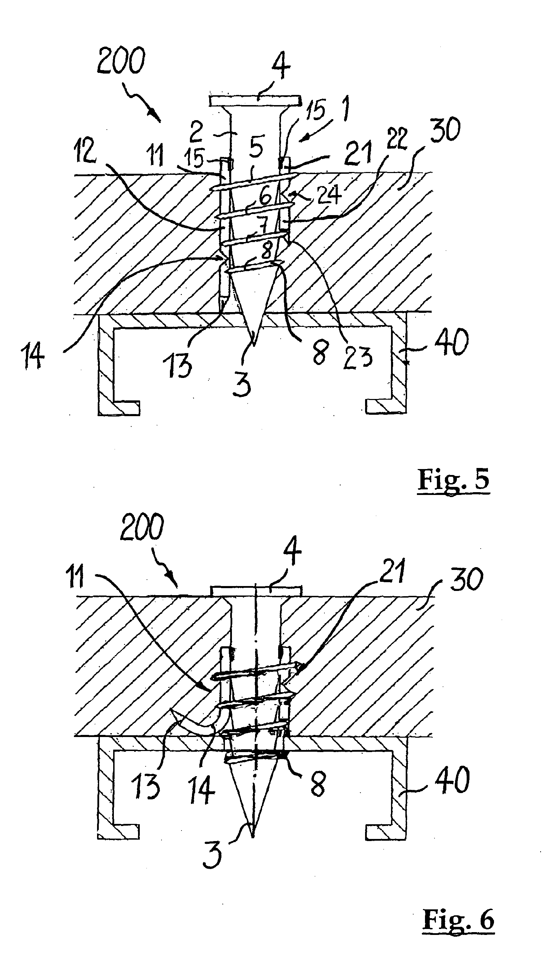

Fig. 5 and 6 show the application of a fastening element according to the invention in the attachment of a dry-wall 30 directly to a steel construction element 40 using a direct fastening technique. The fastening element, which is slightly modified with respect to the fastening element depicted in Figs. 1 - 4 is generally designated with reference numeral 200. Like elements bear the same reference numerals as in Figs. 1 - 4. As a difference to the first embodiment of the fastening element according to the invention which was illustrated and described with reference to Figs. 1 - 4 the fastening element 200 in Figs. 5 an 6 comprises a main nail 1 and two auxiliary nail elements 11 and 21 which with their rear portions are attached by spot welding 15 or the like to the stem 2 of the main nail 1. For that purpose the washer-like annular protrusions 5 - 8 each are provided with two slotlike gaps which are axially aligned with respect to the gaps in the preceeding and/or following annular protrusions. The slot-like gaps are adapted to accommodate the auxiliary nail elements 11 and 21 which are fixedly attached with their rearward ends to the stem 2 of the main nail 1. It is to be understood that the fastening element can comprise three or even more auxiliary nail elements, even though for symmetry reasons a number of three auxiliary nail elements is preferred.

The auxiliary nail elements 11 and 21 have different axial lengths. While auxiliary nail element 11 extends axially beyond the frontmost annular protrusions 8, but is retreated with respect to the tip portion 3 of the main nail 1, auxiliary nail element 21 only extends beyond annular protrusion 7. In case of three auxiliary nail elements all three can have axial lengths which are distinct from each other. However, it is to be understood, that the auxiliary nail elements all can have the same axial lengths. Auxiliary nail element 11 is made of non hardened steel. Fig. 5 shows the situation, in which the fastening element has been driven through the dry wall 30 and the tip portion 3 of its main nail 1 is partly penetrating the steel construction element 40. Auxiliary nail element 11 is shown in the situation where its tip 13 contacts the surface of the steel construction element 40.

Due to the fact that the auxiliary nail element 11 is made of non-hardened steel and further due to the weakened portion 14 along the extension of its shank 12 the auxiliary nail element 11 is deflected away from the stem 2 of the main nail 1 as the driving in of the fastening element 200 continues until in the final stage the head portion 3 of the stem 2 of the main nail 1 contacts the surface of the dry wall. This situation is depicted in Fig. 6. The deflection of the auxiliary nail element 11 away from the stem 2 of the main nail 1 is also supported by the asymmetrical shape of the tip of the auxiliary nail element 11. The second auxiliary nail element 21 is shown to touch the surface of the steel construction element 40. If the length of the second auxiliary nail element 21 was selected longer then it would touch the surface of the steel construction element 40 before the main nail 1 has reached his final end position. If the second auxiliary nail element 21 is made of non-hardened steel it is also deflected away from the stem 2 as the main nail 1 driving in process continues.

Fig. 6 also shows, that the driving-in force of the direct setting tool may be selected such, that the stem 2 of the main nail 1 penetrates the steel construction element 40 until the frontmost annular protrusion 8 is located beyond the steel construction element 40. Thus, the retainment of the attachment point is supported by an additional formlocking connection between the frontmost annular protrusion 8 and the steel construction element 40. It is to be noted, that while the direct fastening process using a fastening element according to the invention has been described with reference to two schematic drawings which illustrate an early stage and the end stage of the fastening process, the direct fastening process is accomplished in a rather short time period using special setting tools by which a fastening element is driven into the underground material by a piston, which is accelerated by expanding gases from liquid, gaseous, or solid fuel, or is driven pneumatically, mechanically or electropneumatically.

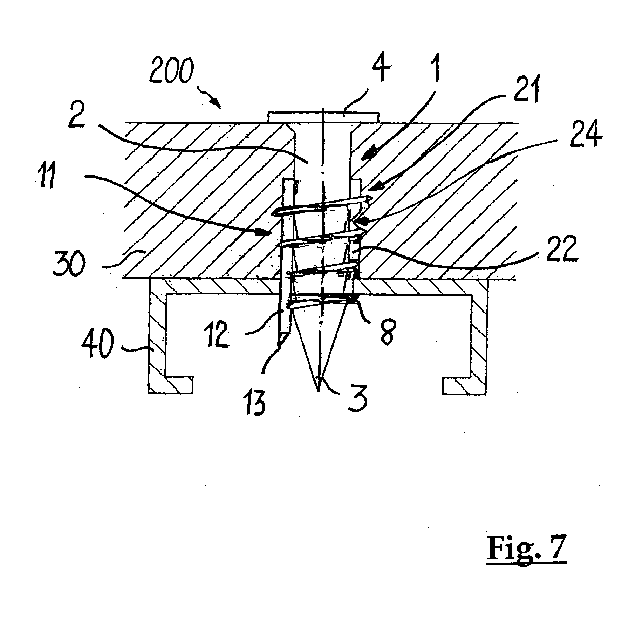

Fig. 7 shows another example of an application of a fastening element 200 according to the invention in the attachment of a dry-wall 30 directly to a steel construction element 40 using a direct fastening technique. The depiction is very similar to that of Fig. 6. Like references numerals therefore designate like elements. The depicted embodiment of the invention differs from the fastening element of Fig. 6 in that the auxiliary nail element 11 is made of hardened steel. It is to be understood that also auxiliary nail element 21 or both auxiliary nail elements could be made of hardened steel. Being made of hardened steel the auxiliary nail element 11 is not deflected during the setting process, but rather its tip 13 penetrates the surface of the steel construction element 40 like the tip portion 3 of the stem 2 of the main nail 1. In order to avoid any deflection the auxiliary nail element 11 in its shank 12 is not provided with a weakened portion, while, e.g., shank 22 of auxiliary nail 21, which is not made of hardened steel is provided with a weakened portion 24. In case of a higher drive-in force or in case of a longer shank 22, the non-hardened auxiliary nail 21 would therefore be deflected away from the stem 2 of the main nail 1.

## Claims

1. Fastening element for applications in direct fastening techniques, comprising a main nail (1) with a stem (2) of hardened steel which has at its one end that faces into a setting direction (S) a tip portion (3) and is provided at its opposite end with a head portion (4) having a diameter which is greater than a diameter of said stem (2), **characterised in that** said stem (2) is provided with at least two annular protrusions (5 - 8) which extend washer-like beyond the diameter of said stem (2) and are axially spaced from each other, a rear annular protrusion (5) which is located closer to said head portion (4) having a diameter (d₁) which approximately corresponds to the diameter of said head portion (4), and a front annular protrusion (8) which is located closer to said tip portion (3) having a diameter (d₄) which is smaller than the diameter (d₁) of said rear annular protrusion (5), each of said at least two washer-like annular protrusions (5 - 8) being provided about its circumference with at least one gap (9), said gaps being axially aligned and accommodating an auxiliary nail element (11) having a shank (12), the diameter of which is smaller than the diameter of said stem (2) of said main nail (1), and having a length which is shorter than that of said stem (2), a tip (13) of said shank (12) being retreated with respect to said tip (3) of said stem (12), said shank (12) of said auxiliary nail (11) being fixedly attached (15) to said stem (2) of said main nail (1) with its rear portion.

2. Fastening element according to claim 1, wherein said stem (2) of said main nail (1) is provided with more than two annular protrusions (5 - 8) which are axially spaced from each other, said annular protrusions (5 - 8) each having a diameter (d₁ - d₄) which is greater than the diameter of an annular protrusion preceding in setting direction (S).

3. Fastening element according to claim 2, wherein the diameters (d₁ - d₄) of said annular protrusions (5 - 8) are dimensioned such, that an enveloping plane (c) of a cone tangents said annular protrusions (5 - 8).

4. Fastening element according to any one of the preceding claims, wherein said annular protrusions (5 - 8) are provided about their circumferences with more than one gap (9), said gaps (9) being axially aligned and each set of axially aligned gaps (9) accommodating an auxiliary nail element (11, 21) having a shank (12, 22), the diameter of which is smaller than the diameter of said stem (2) of said main nail (1), and having a length which is shorter than that of said stem (2), the tips (13, 23) of said shanks (12, 22) being retreated with respect to said tip (3) of said stem (2), said shanks (12, 22) of said auxiliary nails (11, 21) being fixedly attached (15) with their rear portions to said stem (2) of said main nail.

5. Fastening element according to claim 5, wherein the annular protrusions are provided with three sets of axially aligned gaps (9) accommodating three auxiliary nail elements.

6. Fastening element according to claim 4 or claim 5, wherein the auxiliary nail elements (11, 21) have shanks (12, 22), the lengths of which are distinct from each other and each said shank (12; 22) having a weakened portion (14; 24) which is located behind an annular protrusion (8; 7) which is next to the tip (13; 23) of said shank (12; 22).

7. Fastening element according to any one of the preceding claims, wherein said shanks (12, 22) of said auxiliary nail elements (11, 21) have tips (13, 23) which are asymmetrically shaped.

8. Fastening element according to any one of the preceding claims, wherein portions (19) of said stem (2) of said main nail (1) in between two consecutive annular protrusions are conically shaped, the larger diameter of said stem (2) being at the annular protrusion which is closer to said head portion (3) of said stem (2).

9. Fastening element according to claim 8, wherein said larger diameters of said conically shaped portions (10) of said stem (2) correspond to each other.

10. Fastening element according to claim 9, wherein said conically shaped portions (10) have enveloping surfaces, which are equally inclined with respect to an axis (a) of said stem (2) of said main nail (1).

11. Fastening element according to any one of the preceding claims, wherein said annular protrusions (5 - 8) are inclined with respect to a cross-sectional plane (p) extending vertically to an axis (a) of said stem (2).

12. Fastening element according to claims 8 - 11, wherein said conically shaped portions (10) are part of a single enveloping surface, which extends helically about said stem (2) of said main nail (1).

13. Fastening element according to any one of the preceding claims, wherein said shank (12, 22) of each said auxiliary nail element (11, 21) is provided with a weakened portion and being provided with a weakened portion (14, 24) which with respect to the setting direction (S) are located behind said frontmost annular protrusion (8).

14. Fastening element according to any one of the preceding claims, wherein the shank (12, 22) of at least one of said auxiliary nail elements (11, 21) is made of hardened steel.

15. Method for the fastening of dry walls and plaster boards to construction elements (40) of steel, concrete, stone and the like, wherein a fastening element (100, 200) in accordance with any one of the preceding claims is driven directly through the dry wall (30) or plaster board and into the underlying construction element (40) using a direct fastening technique.
